# EUROPEAN PATENT SPECIFICATION

(11) **EP 3 254 896 B1**
(45) Date of publication and mention of the grant of the patent: **19.01.2022**
(21) Application number: 17172394.3
(22) Date of filing: 23.05.2017
(51) Int. Cl.: B60P 7/08

(54) **RESTRAINT TRACK**
BEFESTIGUNGSSCHIENE
RAIL DE FIXATION

(30) Priority: 25.05.2016 GB 201609232
(43) Date of publication of application: 13.12.2017
(73) Proprietor: Loadlok Manufacturing Limited, Hirwaun CF44 9UP (GB)
(72) Inventor: Phillips, Gareth, Merthyr Tydfil, Mid Glamorgan (GB); Bartlett, Michael, Merthyr Tydfil, Mid Glamorgan (GB)
(74) Representative: Abel & Imray LLP

(56) References cited:
- EP-A1- 0 512 791
- EP-A2- 2 591 951
- DE-C2- 4 341 230
- DE-U1-202009 007 027
- US-A- 3 241 500
- US-A1- 2015 110 568

## Description

### Field of the Invention

The present invention concerns a cargo restraint track. More particularly, but not exclusively, this invention concerns a universal cargo restraint track.

### Background of the Invention

It is well known that cargo restraint tracks and fittings are commercially available to make efficient use of cargo spaces located within cargo carrying vehicles such as lorries, ships, and aircraft. Examples of such cargo restraint tracks are known e.g. from EP 0 512 791 A1, US 3 241 500 A, US 2015/110568 A1 and DE 43 41 230 C2.

Through the use of various tracks and fittings it is possible, for example, to partition a cargo hold into multiple floors through the use of second deck beams. Another example would be fittings and corresponding track used to provide garment rails for convenient transport of garments. Various straps and cargo restraint mechanisms may also be used in cargo carrying containers.

One problem associated with the use of such tracks and fittings is cross-compatibility: certain fittings require the use of certain tracks. Thus it may not be possible to switch between the use of different fittings (for example, second decking and garment rails) without either having multiple types of track installed within a cargo bay (which may lead to inefficient use of space and an increase in cost) or without having to refit the cargo bay between jobs (which may lead to inefficient use of time).

The present invention seeks to mitigate the above-mentioned problems.

### Summary of the Invention

The present invention provides, according to a first aspect, a cargo restraint track according to claim 1.

The restraint track may comprise a length, a width, and a height. The restraint track may be longer than it is wide. The restraint track may be substantially longer than it is wide.

The present invention may be used as a universal cargo restraint track which advantageously is arranged to engage with a variety of restraint devices. The cargo restraint track therefore reduces the number of different types of track which must be used in order to utilise a variety of different restraint devices.

The apertures are configured to receive a distal end of the first restraint device, the distal end having an approximately circular cross-section. The apertures are configured to receive a distal end of the second restraint device, the distal end having an approximately rectangular cross-section and the first lip and second lip are each arranged to abut corresponding restraint flanges which project from the distal end of the second restraint device.

One restraint flange may be moveable (under bias) to allow engagement and disengagement with the track. The first lip and second lip may define a receiving portion for receiving the third restraint device, such that the third restraint device may move along the length of the track but is restrained in other directions.

Each aperture may be arranged to receive and engage with a trigger which forms part of the third restraint device.

Each aperture is arranged to be engageable with each of the first, second, and third restraint devices.

Each aperture may be arranged to be engageable with only one of the first, second, and third restraint devices at a time.

Each aperture may be substantially identical in shape.

Each aperture has a substantially circular cross-section, a first notch which extends in a radial direction out of the circumference of the circular cross-section towards the first lip, and a second notch which extends in a radial direction out of the circumference of the circular cross-section towards the second lip. The first notch may extend in a direction defining a notch axis. The notch axis may be perpendicular to the length of the track. The second notch may extend in a direction parallel with the notch axis. The second notch may extend along the notch axis. The first and second notches may be co-axial and extend in substantially opposite directions.

The diameter of the substantially circular cross-section may be greater than 20 mm. The diameter of the substantially circular cross-section may be less than 30 mm. The diameter of the substantially circular cross-section may be less than 24 mm. The diameter of the circular cross-section may be approximately equal to 24 mm.

The cargo restraint track may comprise a restraint surface with a length and the plurality of apertures may run along the length of the restraint surface. The restraint surface may be positioned between the first and second lips. A first arm may project from a first edge of the restraint surface and a second arm may project from a second, opposite, edge of the restraint surface, the restraint surface and first and second arms thereby forming a U-shaped section. The restraint track may comprise a height. The first and second arms may project along the height direction. The restraint surface may be spaced apart from the first and second lips. The restraint surface and first and second lips may be joined to a back plate. The restraint surface and first and second lips may be spaced apart from the back plate. The restraint surface, first and second lips, and back plate may all be substantially parallel to one another.

The first notch of each aperture may pass through the first arm of the U-shaped section. The first arm of the U-shaped section may partially form each aperture. The second notch of each aperture may pass through the second arm of the U-shaped section. The second arm of the U-shaped section may partially form each aperture.

The restraint track may comprise a back plate in a plane substantially parallel with, but spaced apart from, both of the first and second lips; the back plate arranged such that the cargo restraint track may be mounted to an external surface via the back plate.

The back plate may connect the restraint surface with one of the first and second lips. There may be two back plates.

It will be understood that the external surface is a surface that does not form part of the restraint track. The external surface may, for example, be located in the cargo hold of a vehicle such as a lorry, ship, or aircraft. A back plate may be arranged such that the restraint track can be mounted to the external surface using an adhesive. The back plate may comprise apertures arranged such that the restraint track can be mounted to the external surface using fasteners such as rivets or bolts.

The first lip may comprise a first plurality of notches which run along an edge of the first lip, and the second lip may comprise a second plurality of notches which run along an edge of the second lip, the notches being arranged such that a fastening tool is able to be be passed through the notches in order to access the back plate. For example, the end of a rivet gun may be passed through the notch in order to rivet the back plate to a securing surface, for example the wall of a container. Each of the notches may be semi-circular in shape. The notches may have a diameter. The diameter of each of the first plurality of notches may be coincident with an edge of the first lip. The diameter of each of the second plurality of notches may be coincident with an edge of the second lip.

The cargo restraint track may comprise a symmetry line along the length of the cargo restraint track wherein at least one of the apertures, lips, and back plate are mirrored either side of the symmetry line. Each aperture may have a centre defined as the point at the centre of the circular cross-section. The symmetry line may be coincident with the centre of each of the apertures.

According to the invention the cargo restraint track is configured to engage with
a first, approximately cylindrical, restraint device,
a second, beam shaped, restraint device, and
a third, slidable, restraint device, the cargo restraint track being configured to engage with a locking device which forms part of the third restraint device.

The restraint track may be formed from a single piece of material. Making the restraint track from a single piece of material may improve the strength and/or durability of the restraint track, and/or make the restraint track less expensive to manufacture. The material may be rolled steel. The material may be mild steel. The restraint track may be zinc plated after the restraint track has been formed from the single piece of material. The material may be galvanised steel. The material may be stainless steel. The restraint track may be cold rolled from steel coil.

According to another aspect of the invention there is also provided a container comprising a restraint track according to claim 1, wherein the cargo restraint track is mounted upon an internal surface of the container.

According to an unclaimed aspect of the invention there may also be provided a method of mounting a first restraint device upon a cargo restraint track according to the invention, the first restraint device comprising a distal end, the distal end comprising an approximately circular cross-section, wherein the method includes the step of inserting the distal end of the restraint device into an aperture located on the cargo restraint track.

According to a further unclaimed aspect of the invention there may also be provided a method of mounting a second restraint device upon a cargo restraint track according to the invention, the second restraint device comprising a distal end, the distal end comprising an approximately rectangular cross-section with two restraint flanges projecting out of the distal end, wherein the method includes the steps of inserting the distal end of the second restraint device into an aperture located on the restraint track such that one of the restraint flanges engages with the first lip of the restraint track, and the other of the restraint flanges engages with the second lip of the cargo restraint track.

According to a further unclaimed aspect of the invention there may also be provided a method of mounting a third restraint device upon a cargo restraint track according to the invention, wherein the restraint track is arranged such that the first and second lips define a receiving portion for receiving the third restraint device, and the third restraint device comprises a trigger, wherein the method comprises the steps of inserting the third restraint device into the receiving portion, moving the third restraint device along the length of the restraint track, and inserting the trigger into an aperture of the cargo restraint track.

According to yet a further unclaimed aspect of the invention there may also be provided a method of creating a second deck within a cargo container, the method comprising the steps of providing a first and second cargo restraint track according to the invention, the cargo restraint tracks being mounted upon opposite sides of the cargo container, providing a plurality of first restraint devices, each first restraint device comprising a first distal end and a second distal end, the distal ends comprising an approximately circular cross-section, wherein the method includes the steps of inserting the first distal end of each first restraint device into an aperture located on the first cargo restraint track, and inserting the second distal end of each first restraint device into an aperture located on the second cargo restraint track, wherein the plurality of first restraint devices form a second deck.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows an isometric view of a restraint track according to a first embodiment of the invention;
Figure 2 shows an isometric view of a shoring pole mounted upon the restraint track;
Figure 3 shows an isometric view of a captive head fitting mounted within the restraint track;
Figure 4 shows a cross-sectional view of the captive head fitting mounted within the restraint track;
Figure 5 shows an isometric view of a slotted locking head beam fitting mounted within the restraint track;
Figure 6 shows a cross-sectional view of the slotted locking head beam fitting mounted within the restraint track;
Figure 7 shows an isometric view of a slotted locking head webbing fitting mounted within the restraint track; and
Figure 8 shows a cross-sectional view of the slotted locking head webbing fitting mounted within the restraint track.

### Detailed Description

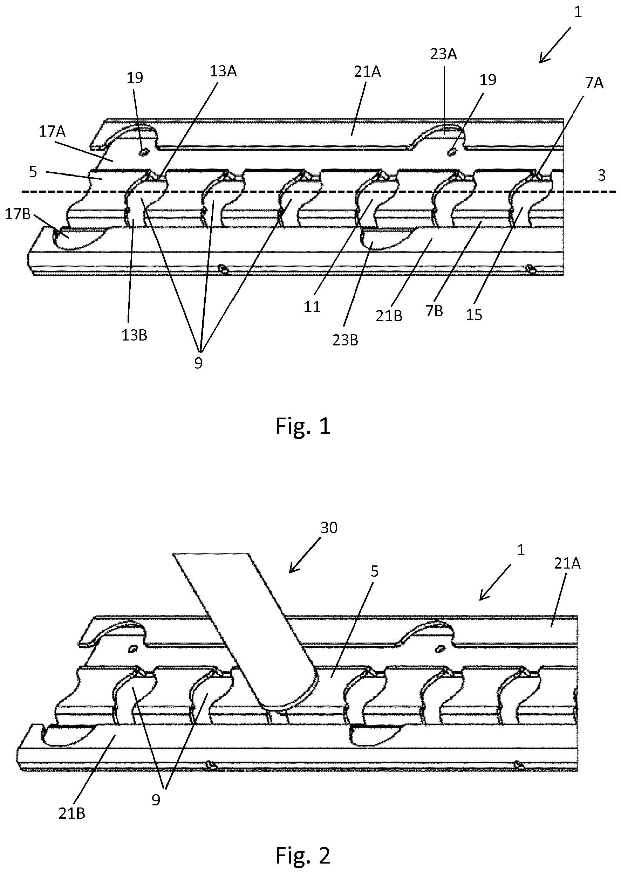

A cargo restraint track 1 according to an embodiment of the invention is shown in Figure 1. The cargo restraint track 1, which is formed by cold rolling steel coil, has a length and a width and is substantially longer than it is wide.

The cargo restraint track 1 comprises a restraint surface 5 which runs along the length of the cargo restraint track 1 and a centre-line 3 which runs along the centre of the restraint surface 5, parallel to the length direction. The restraint surface 5 is arranged such that various load restraint fixings may be inserted into and through the front side of the restraint surface 5. A first arm 7A projects from a first edge of the restraint surface 5 and a second arm 7B projects from a second edge of the restraint surface 5, the first edge and second edge being located on opposite sides across the width of the restraint surface 5. The restraint surface 5, first arm 7A, and second arm 7B thereby form the three sides of a U-shaped channel.

A multiplicity of receiving apertures 9 are formed in the restraint surface 5 and spaced along the centre-line 3 of the cargo restraint track 1. Each receiving aperture 9 consists of a circular hole 11 with a diameter of approximately 24 mm, the centre of the hole 11 being coincident with the centre-line 3 of the cargo restraint track 1. A first notch 13A extends radially out of the circumference of the circular hole 11 along a notch axis in a first direction and a second notch 13B extends radially out of the circumference of the circular hole 11 along the notch axis in a second, opposite, direction, the notch axis being perpendicular to the centre-line 3 and passing through the centre of the circular hole 11. Each receiving aperture 9 is thereby symmetrical about the centre-line 3 of the cargo restraint track 1. The notch, the width of which is approximately equal to 13 mm, extends through the walls of the U-shaped channel thereby forming a slot 15 which bridges the circular hole 11. Such an arrangement allows for fittings which require a slot-type mounting point and for fittings which require a circular mounting point to be mounted upon the cargo restraint track 1.

A first back plate 17A projects from the distal end of the first arm 7A in a plane parallel with the restraint surface 5, away from the U-shaped section. The first back plate 17A is arranged with mounting holes 19 such that the cargo restraint track 1 may be mounted upon a surface which, for example, may be in the cargo hold of a lorry, ship, or aircraft, or a cargo transportation container, such as a freight container.

At the distal end of the first back plate 17A, the cargo restraint track 1 projects upwardly and then folds back on itself to form a first lip 21A which projects back towards the restraint surface 5, the first lip 21A being parallel to and spaced apart from the first back plate 17A. The first lip 21A is arranged such that various fittings may abut the first lip 21A.

A first plurality of semi-circular notches 23A is formed along the free-edge of the first lip 21A, the free edge being the edge which is closest to the restraint surface 5, the semi-circular notches 23A being formed such that the diameter of each semi-circular notch 23A is parallel and coincident with the free-edge of the first lip 21A. The semi-circular notches are arranged such that a fastening tool such as, for example, a rivet gun may be passed through the notches in the first lip 21A in order to access the mounting holes 19 located in the first back plate 17A.

The cargo restraint track 1 is symmetrical about its centre-line 3 such that the first arm 7A, first back plate 17A, and first abutting surface 21A are positioned on a first side of the cargo restraint track 1 and the second arm 7B, a second back plate 17B, and a second lip 21B is located on the second side of the cargo restraint track 1. A second plurality of semi-circular notches 23B is formed in the second lip 21B, the second plurality of semi-circular notches 23B being symmetrical to the first plurality of semi-circular notches 23A.

The cargo restraint track 1 according to the presently described embodiment of the invention is thus arranged to receive various standard-sized cargo restraint fittings, as will now be described with reference to Figures 2 to 8.

Figure 2 shows a shoring pole 30 with standard 24 mm end-plug mounted within circular hole 11 of a receiving aperture 9. The cargo restraint track 1 therefore performs the function of a standard restraint track arranged for mounting of 24 mm end plugs.

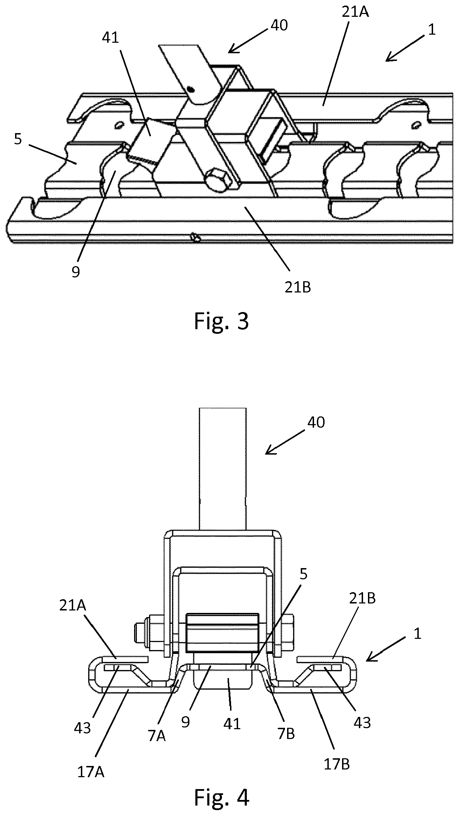

Figure 3 and Figure 4 show a captive head fitting 40 mounted within the cargo restraint track 1. The captive head fitting 40 slides into the profile of the cargo restraint track 1 from an open end. When positioned within the cargo restraint track 1, the first and second lips 21 of the cargo restraint track 1 abut corresponding surfaces 43 located on either side of the captive head fitting 40, as can be seen from the cross-sectional view shown in Figure 4. The cargo restraint track 1 therefore holds the head fitting 40 captive, allowing movement only along the centre-line 3. The head has a spring loaded trigger 41 that locks into the circular hole 11 of a receiving aperture 9. The head can be repositioned along the centre-line 3 of the cargo restraint track 1 by lifting the trigger 41 and moving the head fitting 40 to the desired position.

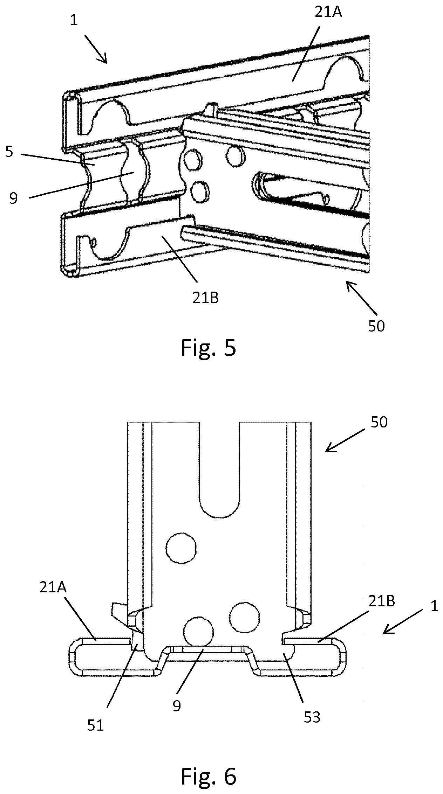

Figure 5 and Figure 6 show a standard slotted locking head beam fitting 50 mounted upon the cargo restraint track 1. The beam fitting 50 plugs directly into the slot 15 formed in a receiving aperture 9. When mounted upon the cargo restraint track 1, the flange 53 projecting from the distal end of the head beam fitting 50 abuts the underside of one of the first and second lips 21 and the beam fitting 50 is locked into position by the spring loaded trigger 51 which abuts the other of first and second lips 21.

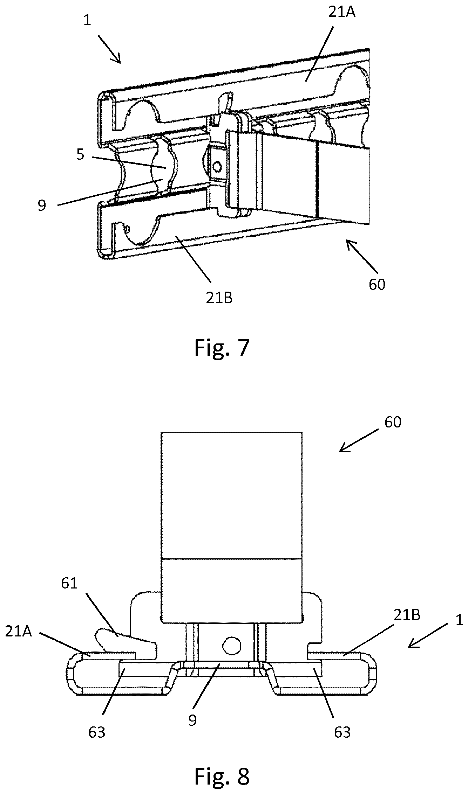

Figure 7 and Figure 8 show a standard slotted locking head webbing sling fitting 60 mounted upon the cargo restraint track 1. The webbing sling fitting 60 plugs directly into the slot 15 formed in a receiving aperture 9. When mounted upon the cargo restraint track 1, the flanges 63 projecting from each side of the webbing sling fitting 60 abut the undersides of the lips 21 of the cargo restraint track 1. The webbing sling fitting 60 is locked into position by the spring loaded trigger 61 which abuts one of the lips 21 of the cargo restraint track 1.

## Claims

1. A cargo restraint track (1) with a length and a plurality of apertures (9) running along the length,
wherein the cargo restraint track (1) comprises a first lip (21A) and a second lip (21B) running along the length to either side of the plurality of apertures (9);
wherein each aperture (9) comprises a substantially circular cross-section (11) so that each aperture (9) is configured to receive and engage a distal end of a
first, approximately cylindrical, restraint device (30); the distal end having an approximately circular cross-section and
wherein each aperture (9) further comprises a first notch (13A) which extends in a radial direction out of the circumference of the substantially circular cross-section (11) towards the first lip (21A), and a second notch (13B) which extends in a radial direction out of the circumference of the substantially circular cross-section (11) towards the second lip (21B) so that each aperture (9) is configured to receive and engage a distal end of a
second, beam shaped, restraint device (50), the distal end having an approximately rectangular cross-section the cargo restraint track being **characterised in that**
the first lip (21A) and second lip (21B) are each arranged to abut corresponding restraint flanges (53) which project from the distal end of the received second restraint device (50); and
**in that** the first lip (21A) and second lip (21B) define a receiving portion for receiving a third, slidable, restraint device (40) such that the third restraint (40) device may move along the length of the track but is restrained in other directions
and wherein the apertures (9) are configured to receive and engage with a locking device (41) which forms part of the third restraint device (40).

2. A cargo restraint track (1) according to claim 1, wherein the apertures (9) are configured to receive a distal end of the first restraint device (30), the distal end having an approximately circular cross-section.

3. A cargo restraint track (1) according to claim 1 or claim 2, wherein each aperture (9) is arranged to receive and engage with a trigger (41) which forms part of the third restraint device (40).

4. A restraint track (1) according to any previous claim wherein the restraint track (1) comprises a back plate (17A) in a plane substantially parallel with, but spaced apart from, both of the first (21A) and second (21B) lips; the back plate (17A) arranged such that the cargo restraint track (1) may be mounted to an external surface via the back plate (17A).

5. A cargo restraint track (1) according to claim 4, wherein the first lip (21A) comprises a first plurality of notches (23A) which run along an edge of the first lip (21A), and
the second lip (21B) comprises a second plurality of notches (23B) which run along an edge of the second lip (21B),
the notches being arranged such that a fastening tool is able to be passed through the notches in order to access the back plate.

6. A restraint track (1) according to any preceding claim wherein the restraint track (1) is formed from a single piece of material.

7. A container comprising a restraint track (1) according to any previous claim, wherein the restraint track (1) is mounted upon an internal surface of the container.

## Patentansprüche

1. Ladegutsicherungsschiene (1) mit einer Länge und mehreren Öffnungen (9) entlang der Länge,
wobei die Ladegutsicherungsschiene (1) eine erste Lippe (21A) und eine zweite Lippe (21B), die entlang der Länge zu beiden Seiten der mehreren Öffnungen (9) verlaufen, umfasst;
wobei jede Öffnung (9) einen im Wesentlichen kreisförmigen Querschnitt (11) umfasst, so dass jede Öffnung (9) konfiguriert ist, um ein distales Ende einer ersten, annähernd zylindrischen Rückhaltevorrichtung (30) aufzunehmen und dieses darin eingreifen zu lassen; wobei das distale Ende einen annähernd kreisförmigen Querschnitt besitzt, und
wobei jede Öffnung (9) ferner eine erste Aussparung (13A), die sich in radialer Richtung aus dem Umfang des im Wesentlichen kreisförmigen Querschnitts (11) heraus zur ersten Lippe (21A) hin erstreckt, und eine zweite Aussparung (13B), die sich in radialer Richtung aus dem Umfang des im Wesentlichen kreisförmigen Querschnitts (11) heraus zur zweiten Lippe (21B) hin erstreckt, umfasst, so dass jede Öffnung (9) konfiguriert ist, um ein distales Ende einer zweiten, balkenförmigen Rückhaltevorrichtung (50) aufzunehmen und dieses darin eingreifen zu lassen, wobei das distale Ende einen annähernd rechteckigen Querschnitt besitzt, wobei die Ladegutsicherungsschiene **dadurch gekennzeichnet ist, dass**
die erste Lippe (21A) und die zweite Lippe (21B) jeweils so angeordnet sind, dass sie an zugehörige Rückhalteflansche (53) anstoßen, die vom distalen Ende der aufgenommenen zweiten Rückhaltevorrichtung (50) hervorstehen; und dass
die erste Lippe (21A) und die zweite Lippe (21B) einen Aufnahmebereich zur Aufnahme einer dritten, verschiebbaren Rückhaltevorrichtung (40) definieren, so dass die dritte Rückhaltevorrichtung (40) sich entlang der Länge der Schiene bewegen kann, in andere Richtungen jedoch zurückgehalten wird,
und wobei die Öffnungen (9) konfiguriert sind, um eine Feststellvorrichtung (41), die einen Teil der dritten Rückhaltevorrichtung (40) bildet, aufzunehmen und diese darin eingreifen zu lassen.

2. Ladegutsicherungsschiene (1) gemäß Anspruch 1, wobei die Öffnungen (9) konfiguriert sind, um ein distales Ende der ersten Rückhaltevorrichtung (30) aufzunehmen, wobei das distale Ende einen annähernd kreisförmigen Querschnitt besitzt.

3. Ladegutsicherungsschiene (1) gemäß Anspruch 1 oder Anspruch 2, wobei jede Öffnung (9) angeordnet ist, um einen Auslöser (41), der einen Teil der dritten Rückhaltevorrichtung (40) bildet, aufzunehmen und diesen darin eingreifen zu lassen.

4. Sicherungsschiene (1) gemäß einem vorhergehenden Anspruch, wobei die Sicherungsschiene (1) eine Rückplatte (17A) in einer Ebene im Wesentlichen parallel zu, jedoch beabstandet von sowohl der ersten (21A) als auch der zweiten (21B) Lippe umfasst; wobei die Rückplatte (17A) so angeordnet ist, dass die Ladegutsicherungsschiene (1) durch die Rückplatte (17A) an einer Außenfläche befestigt werden kann.

5. Ladegutsicherungsschiene (1) gemäß Anspruch 4, wobei die erste Lippe (21A) eine erste Mehrzahl von Aussparungen (23A) umfasst, die entlang eines Rands der ersten Lippe (21A) verlaufen, und
die zweite Lippe (21B) eine zweite Mehrzahl von Aussparungen (23B) umfasst, die entlang eines Rands der zweiten Lippe (21B) verlaufen,
wobei die Aussparungen so angeordnet sind, dass ein Befestigungswerkzeug durch die Aussparungen geführt werden kann, um zur Rückplatte zu gelangen.

6. Sicherungsschiene (1) gemäß einem vorhergehenden Anspruch, wobei die Sicherungsschiene (1) aus einem einzigen Stück Material geformt ist.

7. Container, der eine Sicherungsschiene (1) gemäß einem vorhergehenden Anspruch umfasst, wobei die Sicherungsschiene (1) auf einer Innenfläche des Containers montiert ist.

## Revendications

1. Rail de retenue de cargaison (1) présentant une longueur et une pluralité d'ouvertures (9) s'étendant sur cette longueur,
le rail de retenue de cargaison (1) comprenant une première lèvre (21A) et une seconde lèvre (21B) s'étendant sur la longueur de part et d'autre de la pluralité d'ouvertures (9) ;
dans lequel chaque ouverture (9) comprend une section transversale sensiblement circulaire (11) de sorte que chaque ouverture (9) est conçue pour recevoir, et venir en prise avec une extrémité distale d'un premier dispositif de retenue (30) approximativement cylindrique ; l'extrémité distale ayant une section transversale approximativement circulaire et
dans lequel chaque ouverture (9) comprend en outre une première encoche (13A) qui s'étend dans une direction radiale hors de la circonférence de la section transversale sensiblement circulaire (11) vers la première lèvre (21A), et une seconde encoche (13B) qui s'étend dans une direction radiale hors de la circonférence de la section transversale sensiblement circulaire (11) vers la seconde lèvre (21B), de sorte que chaque ouverture (9) soit conçue pour recevoir, et venir en prise avec, une extrémité distale d'un deuxième dispositif de retenue (50) en forme de poutre, l'extrémité distale ayant une section transversale approximativement rectangulaire, le rail de retenue de cargaison étant **caractérisé en ce que**
la première lèvre (21A) et la seconde lèvre (21B) sont chacune agencées pour venir en butée contre des brides de retenue correspondantes (53) qui font saillie à partir de l'extrémité distale du deuxième dispositif de retenue (50) reçu ;
et **en ce que** la première lèvre (21A) et la seconde lèvre (21B) définissent une partie de réception pour recevoir un troisième dispositif de retenue coulissant (40) de sorte que le troisième dispositif de retenue (40) peut se déplacer dans le sens de la longueur du rail mais est retenu dans les autres directions et dans lequel les ouvertures (9) sont conçues pour recevoir, et venir en prise avec, un dispositif de verrouillage (41) qui fait partie du troisième dispositif de retenue (40).

2. Rail de retenue de cargaison (1) selon la revendication 1, dans lequel les ouvertures (9) sont conçues pour recevoir une extrémité distale du premier dispositif de retenue (30), l'extrémité distale ayant une section transversale approximativement circulaire.

3. Rail de retenue de cargaison (1) selon la revendication 1 ou la revendication 2, dans lequel chaque ouverture (9) est agencée pour recevoir, et venir en prise avec, un dispositif de déclenchement (41) qui fait partie du troisième dispositif de retenue (40).

4. Rail de retenue (1) selon l'une quelconque des revendications précédentes, le rail de retenue (1) comprenant une plaque arrière (17A) dans un plan sensiblement parallèle à, mais espacé de, la première (21A) et la seconde (21B) lèvres ; la plaque arrière (17A) étant agencée de sorte que le rail de retenue de cargaison (1) peut être monté sur une surface externe par l'intermédiaire de la plaque arrière (17A).

5. Rail de retenue de cargaison (1) selon la revendication 4, dans lequel la première lèvre (21A) comprend une première pluralité d'encoches (23A) qui s'étendent le long d'un bord de la première lèvre (21A), et
la seconde lèvre (21B) comprend une seconde pluralité d'encoches (23B) qui s'étendent le long d'un bord de la seconde lèvre (21B),
les encoches étant agencées de sorte qu'un outil de fixation puisse traverser les encoches afin d'accéder à la plaque arrière.

6. Rail de retenue (1) selon l'une quelconque des revendications précédentes, dans lequel le rail de retenue (1) est constitué d'une seule pièce de matériau.

7. Conteneur comprenant un rail de retenue (1) selon l'une quelconque des revendications précédentes, dans lequel le rail de retenue (1) est monté sur une surface interne du conteneur.
